# EUROPÄISCHE PATENTSCHRIFT

(11) **EP 0 486 906 B1**
(45) Veröffentlichungstag und Bekanntmachung des Hinweises auf die Patenterteilung: **25.01.1995**
(21) Anmeldenummer: 91119113.8
(22) Anmeldetag: 11.11.1991
(51) Int. Cl.: C08F 285/00, C08L 27/00

(54) **Schlagzähmodifier für glasklare witterungsbeständige PVC-Formmassen**
Impact strenght modifier for weather-resistant PVC-moulding compound having the transparency of glass
Agent modifiant la résistance au choc pour masse à mouler en PVC résistant aux intempéries et ayant la transparence du verre

(30) Priorität: 23.11.1990 DE 4037236
(43) Veröffentlichungstag der Anmeldung: 27.05.1992
(73) Patentinhaber: BASF Aktiengesellschaft, 67063 Ludwigshafen (DE)
(72) Erfinder: Goertz, Hans-Helmut, Dr., W-6713 Freinsheim (DE); Hatzmann, Guenter, Dr., W-6906 Leimen (DE); Oschmann, Werner, Dr., W-6700 Ludwigshafen (DE)

(56) Entgegenhaltungen:
- EP-A- 0 374 814
- US-A- 4 173 600

## Beschreibung

Die Erfindung betrifft Pfropfcopolymerisate erhältlich durch aufeinanderfolgende Emulsionspolymerisation von Monomerengemischen in vier Stufen A, B, C und D, wobei die Polymerisation des Monomerengemisches der jeweiligen Stufe in Gegenwart des Polymerisationsproduktes der vorangegangenen Stufen durchgeführt wird, die Reihenfolge der Stufen A, B, C, D oder A, C, B, D ist,
in der Stufe A
   5 - 35 Gew.-% eines Monomerengemischs aus
   60-79,9 Gew.-% eines vinylaromatischen Monomeren,
   20-39,9 Gew.-% eines ethylenisch ungesättigten Nitrils,
   0,1-10 Gew.-% eines zwei- oder mehrfach ethylenisch ungesättigten Monomeren und
   0-10 Gew.-% eines weiteren Monomeren
in der Stufe B
   20 - 40 Gew.-% eines Monomerengemischs aus
   50-74,9 Gew.-% eines vinylaromatischen Monomeren,
   25-49,9 Gew.-% eines C₁-C₁₈-Alkylacrylats,
   0,1-10 Gew.-% eines zwei- oder mehrfach ethylenisch ungesättigten Monomeren und
   0-10 Gew.-% eines weiteren Monomeren
in der Stufe C
   20 - 45 Gew.-% eines Monomerengemischs aus
   90-99,9 Gew.-% eines C₁-C₁₈-Alkylacrylats und
   0,1-10 Gew.-% eines zwei- oder mehrfach ungesättigten Monomeren und
   0-10 Gew.-% eines weiteren Monomeren und
in der Stufe D
   5 - 35 Gew.-% eines Monomerengemischs aus
   60-79,9 Gew.-% eines vinylaromatischen Monomeren
   20-39,9 Gew.-% eines ethylenisch ungesättigten Nitrils und
   0,1-10 Gew.-% eines zwei- oder mehrfach ungesättigten Monomeren und
   0-10 Gew.-% eines weiteren Monomeren
polymerisiert werden, wobei sich die Gewichtsprozente der in den einzelnen Stufen eingesetzten Monomerengemische auf das Pfropfcopolymerisat beziehen und sich auf 100 Gew.-% addieren.

Weiterhin betrifft die Erfindung thermoplastische Formmassen, welche Pfropfcopolymerisate gemäß Anspruch 1 enthalten.

Als Modifizierungsmittel zur Verbesserung der Schlagzähigkeit von Polyvinylchlorid sind z.B. aus der DE-A-22 44 519 und der DE-A-21 30 989 Pfropfcopolymerisate bekannt, bei denen auf einen sogenannten "harten" Kern aus Monomeren, deren Homopolymere Glasübergangstemperaturen deutlich über 0°C aufweisen, eine weiche Hülle eines kautschukartigen Polymeren und eine weitere Hülle aus überwiegend Methylmethacrylat aufpolymerisiert sind.

In der EP-A-379 086 werden vierstufige Pfropfcopolymerisate mit einem "harten" Kern aus vernetztem Polystyrol beschrieben.

Der harte Kern der in der US-A-40 26 970 beanspruchten Pfropfcopolymerisate besteht aus überwiegend Acrylnitril.

Für zahlreiche Anwendungen sind PVC-Formmassen von hoher Schlägzähigkeit und gleichzeitig sehr guter Transparenz und Witterungsstabilität gewünscht. Insbesondere zeigen bisherige PVC-Formteile für diese Anwendungen noch eine starke Opaleszenz (Blaustich).

Aufgabe dieser Erfindung war es daher Pfropfcopolymerisate als Modifizierungsmittel für PVC zur Verfügung zu stellen, welche die Herstellung opaleszensfreier, transparenter und witterungsbeständiger Formteile mit hoher Schlagzähigkeit ermöglichen.

Demgemäß wurden die eingangs definierten Pfropfcopolymerisate sowie ihre Verwendung als Modifizierungsmittel in Polyvinylhalogeniden gefunden.

Die Pfropfcopolymerisate sind erhältlich durch Emulsionspolymerisation von Monomerengemischen in vier Stufen A, B, C und D, wobei die Polymerisation des Monomerengemischs der jeweiligen Stufe in Gegenwart des Polymerisationsprodukts der vorangegangenen Stufen durchgeführt wird. Die Monomerengemische der einzelnen Stufen werden in der Reihenfolge A-B-C-D oder A-C-B-D; bevorzugt in der Reihenfolge A-B-C-D polymerisiert.

Der Anteil der Monomerengemische in den einzelnen Stufen beträgt :
Stufe A : 5-35 Gew.-%, bevorzugt 10-30 Gew.-%
Stufe B : 20-40 Gew.-% bevorzugt 25-40 Gew.-%
Stufe C : 20-45 Gew.-% bevorzugt 25-40 Gew.-%
Stufe D : 5-35 Gew.-% bevorzugt 10-30 Gew.-%
Die Gewichtsprozente der in den einzelnen Stufen eingesetzten Monomerengemische beziehen sich auf das Pfropfcopolymerisat.

Die Summe der Gewichtsprozente ergibt 100.

Bevorzugt besteht das Monomerengemisch der Stufe A aus
65-79,9 Gew.-% eines vinylaromatischen Monomeren
20-34,9 Gew.-% eines ethylenisch ungesättigten Nitrils
0,1-5 Gew.-% eines zwei- oder mehrfach ethylenisch ungesättigten Monomeren und
0-5 Gew.-% eines weiteren Monomeren.

Bevorzugt besteht das Monomerengemisch der Stufe B aus
55-74,9 Gew.-% eines vinylaromatischen Monomeren
25-44,9 Gew.-% eines C₁-C₁₈-Alkylacrylats
0,1-5 Gew.-% eines zwei- oder mehrfach ethylenisch ungesättigten Monomeren
0-5 Gew.-% eines weiteren Monomeren.

Bevorzugt besteht das Monomerengemisch der Stufe C aus
95-99,9 Gew.-% eines C₁-C₁₈-Alkylacrylats
0,1-5 Gew.-% eines zwei- oder mehrfach ungesättigten Monomeren
0-5 Gew.-% eines weiteren Monomeren.

Bevorzugt besteht das Monomerengemisch der Stufe D aus
65-79,9 Gew.-% eines vinylaromatischen Monomeren
20-39,9 Gew.-% eines ethylenisch ungesättigten Nitrils
0,1-5 Gew.-% eines zwei- oder mehrfach ungesättigten Monomeren
0-5 Gew.-% eines weiteren Monomeren.

Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol.

Besonders bevorzugt ist Styrol.

Als ethylenisch ungesättigte Nitrile kommen besonders Acrylnitril und (Meth)acrylnitril in Betracht.

Unter den Alkylacrylaten sind die C₁-C₁₂-Alkylacrylate, z.B. Methylacrylat, Ethylacrylat, Butylacrylat, 2-Ethylhexylacrylat, Laurylacrylat, von besonderer Bedeutung.

Als vernetzend wirkende zwei- oder mehrfach ethylenisch ungesättigte Monomere sind z.B. Allyl-, Methallyl- und Vinylester von Di-, Tri- oder höheren Carbonsäuren wie z.B. Adipinsäuredivinylester, Phthalsäurediallylester, Maleinsäurediallylester, Fumarsäurediallylester; Allyl-, Methallyl- und Vinylether mehrfunktioneller Alkohole wie Ethylenglykoldivinylether, 1,3-Butadiendioldivinylether, 1,4-Butandioldivinylether, Pentaerythrittriallylether; Ester der Acryl- oder Methacrylsäure mit mehrwertigen Alkoholen wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- oder Polyethylenglykoldi(meth)acrylat, Divinylbenzol oder Mischungen der genannten Substanzen geeignet. Bevorzugt sind zweifach ungesättigte Monomere, insbesondere Divinylbenzol sowie 1,3-Butandioldi(meth)acrylat und 1,4-Butandioldi(meth)acrylat. Neben nichtkonjugierten ethylenisch zwei- oder mehrfach ungesättigten Monomeren können auch konjugierte zwei- oder mehrfach ungesättigte Monomere eingesetzt werden. Bevorzugt sind hier ebenfalls zweifach ethylenisch ungesättigte Monomere, insbesondere Butadien und Isopren.

Weitere Monomere können z.B. Vinylether wie Vinylisobutylether sowie Vinylester wie Vinylacetat oder Vinylpropionat oder C₁-C₁₆, insbesondere C₁-C₈-Alkylmethacrylate sein. In den Stufen A und D kommen als weitere Monomere auch C₁-C₁₈-Alkylacrylate in Betracht. Der Einsatz weiterer Monomere ist für eine Verbesserung der Schlagzähigkeit und Transparenz nicht zwingend notwendig, kann jedoch in einigen Fällen vorteilhaft sein.

Die Herstellung der Pfropfcopolymerisate erfolgt durch Emulsionspolymerisation.

Als Emulgatoren dienen z.B. Natrium-, Kalium- oder Ammoniumsalze von gesättigten oder ungesättigten C₈-C₂₀-Fettsäuren wie Laurinsäure, Stearinsäure, Palmitinsäure, Ölsäure u. a., C₈-6₂₀-Alkylsulfonsäuren, Schwefelsäure-C₈-C₂₀-alkylester, Alkylbenzolsulfonsäuren, Abiethinsäure und deren Derivate, Sulfobernsteinsäurealkylester, alkylierte Diphenylethersulfonsäuren.

Durch die Wahl von Art und Menge des Emulgators kann in bekannter Weise die Teilchengröße der Emulsion eingestellt werden. Sie kann zwischen 50 und 300 nm liegen. Bevorzugt liegt sie im Bereich von 70 bis 200 nm, besonders bevorzugt zwischen 70 und 150 nm. Durch die Teilchengröße werden sowohl die optischen Eigenschaften (Transparenz, Opaleszenz) als auch die mechanischen Eigenschaften (Schlagzähigkeit) beeinflußt.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, tert.-Butylhydroperoxid, tert.-Butylperacetat in Kombination mit Reduktionsmitteln wie Natriumformaldehydsulfoxylat oder Ascorbinsäure in Gegenwart von Eisensalzen in Frage. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der Stufe A polymerisiert. Danach werden die Monomeren der weiteren Stufen in der Reihenfolge B-C-D oder C-B-D zur wäßrigen Emulsion gegeben. Die Monomeren in den einzelnen Stufen werden zu mehr als 70 Gew.-%, bevorzugt zu mehr als 95 Gew.-%, besonders bevorzugt zu mehr als 99 Gew.-% auspolymerisiert, bevor mit der Zugabe der Monomeren einer weiteren Stufe begonnen wird.

Der Feststoffgehalt der Dispersionen beträgt bevorzugt 30 bis 60 Gew.-%.

Das Pfropfcopolymerisat kann aus der Dispersion in bekannter Weise z.B. durch Fällung oder Sprühtrocknung isoliert und mit einem Thermoplasten und gegebenenfalls weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Wärmeformbeständigkeit, und Schlagzähigkeit nach bekannten Verfahren in Extrudern, Knetern oder Walzen gemischt werden.

Die thermoplastischen Formmassen enthalten geeigneterweise 2-40 Gew.-%, insbesondere 5-30 Gew.-% der erfindungsgemäßen Pfropfcopolymerisate.

Die erfindungsgemäßen Pfropfcopolymerisate sind insbesondere als Modifizierungsmittel für Formmassen auf Basis von Polyvinylhalogeniden geeignet.

Bevorzugt sind daher thermoplastische Formmassen enthaltend 60-98 Gew.-%, vorzugsweise 70-95 Gew.-% eines Polyvinylhalogenids und
2-40 Gew.-% vorzugsweise 5 bis 30 Gew.-% des Pfropfcopolymerisats.

Als Polyvinylhalogenide sind vor allem Homo- und Copolymere des Vinylchlorids mit mindestens 80 Gew.-% Vinylchlorideinheiten oder nachchloriertes Polyvinylchlorid geeignet.

Besonders bevorzugt sind Homopolymere des Vinylchlorids (Polyvinylchlorid).

Die Verarbeitung der Formmassen erfolgt durch für Thermoplaste übliche Methoden (Extrudieren, Spritzgießen, Kalandrieren, Pressen, Tiefziehen).

Es werden Formteile mit hoher Schlagzähigkeit erhalten, die eine hohe Transparenz besitzen, witterungsstabil sind und im wesentlichen keine Opaleszens, bzw. keinen Blaustich aufweisen.

### Beispiele

### Herstellung der Pfropfcopolymerisate

### Beispiel 1

In einem mit Rührung, Temperierung und Dosiervorrichtungen ausgestatteten Reaktionsgefäß wurde eine Mischung aus 2 kg Wasser, 2,8 g eines handelsüblichen Natriumalkylsulfonates mit einer mittleren Kettenlänge von etwa 14 Kohlenstoffatomen, 1,5 g Tetranatriumpyrophosphat und 1,7 g Natriumperoxodisulfat unter Rühren auf 75°C erwärmt. (Alle folgenden Schritte wurden bei dieser Temperatur ausgeführt.) Dann wurde eine Mischung von 204 g Styrol, 90 g Acrylnitril und 6 g Butandiol-1,4-diacrylat in 45 min zudosiert und 1 h nachreagiert. Hiernach wurden innerhalb 1 h parallel eine Lösung von 2 g Natriumperoxodisulfat und 6 g Emulgator (s.o.) in 300 g Wasser und eine Mischung aus 390 g Styrol, 198 g n-Butylacrylat und 12 g Butadien zudosiert und 30 min nachpolymerisiert. Nun wurden innerhalb 1 h wiederum parallel eine Lösung von 2 g Natriumperoxodisulfat und 8 g Emulgator (s.o.) in 300 g Wasser und eine Mischung von 582 g n-Butylacrylat und 18 g Butadien zudosiert und 1 h nachpolymerisiert. Hiernach wurde eine Lösung von 2 g Natriumperoxodisulfat und 6,4 g Emulgator (s.o.) in 300 g Wasser zugegeben und anschließend eine Mischung aus 350 g Styrol, 145 g Acrylnitril und 5 g Butandiol-1,4-diacrylat innerhalb 1 h zudosiert. Nach weiteren 1 1/2 h wurde gekühlt. Die erhaltene Dispersion wies einen Feststoffgehalt von 40,1 Gew.-% und einen pH-Wert von 3,8 auf. Sie wurde bei -20°C koaguliert, der Feststoff abgetrennt und getrocknet.

Das Pfropfcopolymerisat hatte folgenden Aufbau.
15 Gew.-% Stufe A
aus 68 Gew.-% S
30 Gew.-% ACN
2 Gew.-% BDA
30 Gew.-% Stufe B
aus 65 Gew.-% S
33 Gew.-% n-BA
2 Gew.-% B
30 Gew.-% Stufe C
aus 97 Gew.-% n-BA
3 Gew.-% B
25 Gew.-% Stufe C
aus 70 Gew.-% S
29 Gew.-% ACN
1 Gew.-% BDA
S: Styrol; ACN: Acrylnitril; n-BA: n-Butylacrylat; B: Butadien; BDA: Butandiol-diacrylat

### Beispiele 2 - 5

Die Pfropfcopolymerisate wurden analog zu Beispiel 1 hergestellt.

Sie unterschieden sich gegenüber dem Pfropfcopolymerisat aus Beispiel 1 nur im Gewichtsanteil der einzelnen Stufen (Tab. 1).

**Tabelle 1**

| Beispiel | Anteil der jeweiligen Stufe am gesamten Pfropfcopolymeren [Gew.-%] | | | |
|---|---|---|---|---|
| | Stufe A | Stufe B | Stufe C | Stufe D |
| 1 | 15 | 30 | 30 | 25 |
| 2 | 15 | 33 | 27 | 25 |
| 3 | 15 | 25 | 30 | 30 |
| 4 | 15 | 35 | 30 | 20 |
| 5 | 15 | 35 | 25 | 25 |

### Herstellung von PVC-Formmassen

90 Teile S-PVC vom K-Wert 57 wurden mit 10 Teilen Pfropfcopolymerisat, 1 Teil Zinnstabilisator (Di-n-octylzinn-bis-thioglycolsäureisooctylester), 0,8 Teilen innerem Gleitmittel (Loxiol G 16, Henkel) und 0,3 Teilen äußerem Gleitmittel (Loxiol G 72, Henkel) in einem Walzwerk bei 160°C 8 min gewalzt. Aus dem erhaltenen Walzfell wurden durch Pressen bei 180°C die Prüfkörper hergestellt. Durchlicht und Streulicht wurden an 4 mm dicken Preßplatten mit Hilfe der Ulbricht-Kugel, die Transmission bei 400 nm an 1 mm dicken Preßplatten mit Hilfe eines Spektralphotometers gegen eine entsprechende unmodifizierte PVC-Platte ermittelt. Die Ermittlung der D-V-Kerbschlagzähigkeit erfolgte nach DIN 53 453 (Tabelle 2).

**Tabelle 2**

| Pfropfcopolymer Beispiel | Transparenz | | Transmission 400 nm [%] | Doppel-V-Kerbschlagzähigkeit [kJ/m²] | | |
|---|---|---|---|---|---|---|
| | Durchlicht [%] | Streulicht [%] | | 23°C | 0°C | -20°C |
| 1 | 83,1 | 12,0 | 57 | 107 | 27 | 7 |
| 2 | 80,1 | 12,6 | 58 | 113 | 26 | 9 |
| 3 | 78,8 | 12,3 | 56 | 91 | 26 | 8 |
| 4 | 81,4 | 13,2 | 59 | 98 | 26 | 9 |
| 5 | 84,8 | 9,2 | 69 | 101 | 12 | 6 |

## Patentansprüche

1. Pfropfcopolymerisate, erhältlich durch aufeinanderfolgende Emulsionspolymerisation von Monomerengemischen in vier Stufen A, B, C und D, wobei die Polymerisation des Monomerengemisches der jeweiligen Stufe in Gegenwart des Polymerisationsproduktes der vorangegangenen Stufen durchgeführt wird, die Reihenfolge der Stufen A, B, C, D oder A, C, B, D ist,
in der Stufe A
5 - 35 Gew.-% eines Monomerengemischs aus
60-79,9 Gew.-% eines vinylaromatischen Monomeren,
20-39,9 Gew.-% eines ethylenisch ungesättigten Nitrils,
0,1-10 Gew.-% eines zwei- oder mehrfach ethylenisch ungesättigten Monomeren und
0-10 Gew.-% eines weiteren Monomeren
in der Stufe B
20 - 40 Gew.-% eines Monomerengemischs aus
50-74,9 Gew.-% eines vinylaromatischen Monomeren,
25-49,9 Gew.-% eines C₁-C₁₈-Alkylacrylats,
0,1-10 Gew.-% eines zwei- oder mehrfach ethylenisch ungesättigten Monomeren und
0-10 Gew.-% eines weiteren Monomeren,
in der Stufe C
20 - 45 Gew.-% eines Monomerengemischs aus
90-99,9 Gew.-% eines C₁-C₁₈-Alkylacrylats und
0,1-10 Gew.-% eines zwei- oder mehrfach ungesättigten Monomeren und
0-10 Gew.-% eines weiteren Monomeren und
in der Stufe D
5 - 35 Gew.-% eines Monomerengemischs aus
60-79,9 Gew.-% eines vinylaromatischen Monomeren
20-39,9 Gew.-% eines ethylenisch ungesättigten Nitrils und
0,1-10 Gew.-% eines zwei- oder mehrfach ungesättigten Monomeren und
0-10 Gew.-% eines weiteren Monomeren
polymerisiert werden, wobei sich die Gewichtsprozente der in den einzelnen Stufen eingesetzten Monomerengemische auf das Pfropfcopolymerisat beziehen und sich auf 100 Gew.-% addieren.

2. Verfahren zur Herstellung von Pfropfcopolymerisaten gemäß Anspruch 1, dadurch gekennzeichnet, daß man die Herstellung gemäß den dort beschriebenen Maßnahmen durchführt.

3. Thermoplastische Formmassen, enthaltend
2-40 Gew.-% eines Pfropfcopolymerisats gemäß Anspruch 1.

4. Thermoplastische Formmassen, enthaltend
60-98 Gew.-% eines Polyvinylhalogenids und
2-40 Gew.-% eines Pfropfcopolymerisats gemäß Anspruch 1

5. Formkörper, hergestellt aus thermoplastischen Formmassen gemäß Anspruch 3 oder 4.

## Claims

1. A graft copolymer obtainable by successive emulsion polymerization of monomer mixtures in four stages A, B, C, D, wherein the polymerisation of the monomer mixture of the particular stage is carried out in the presence of the polymerization product of the preceding stages, the sequence of the stages is A, B, C, D or A, C, B, D and
in stage A
5-35% by weight of a monomer mixture of
60-79.9% by weight of a vinylaromatic monomer,
20-39.9% by weight of an ethylenically unsaturated nitrile,
0.1-10% by weight of a di- or polyethylenically unsaturated monomer and
0-10% by weight of a further monomer,
in stage B
20-40% by weight of a monomer mixture of
50-74.9% by weight of a vinylaromatic monomer,
25-49.9% by weight of a C₁-C₁₈-alkyl acrylate,
0.1-10% by weight of a di- or polyethylenically unsaturated monomer and
0-10% by weight of a further monomer,
in stage C
20-45% by weight of a monomer mixture of
90-99.9% by weight of a C₁-C₁₈-alkyl acrylate,
0.1-10% by weight of a di- or polyunsaturated monomer and
0-10% by weight of a further monomer and
in stage D
5-35% by weight of a monomer mixture of
60-79.9% by weight of a vinylaromatic monomer,
20-39.9% by weight of an ethylenically unsaturated nitrile,
0.1-10% by weight of a di- or polyunsaturated monomer and
0-10% by weight of a further monomer
are polymerized, the percentages by weight of the monomer mixtures used in the individual stages being based on the graft copolymer and summing to 100% by weight.

2. A process for the preparation of a graft copolymer as claimed in claim 1, wherein the preparation is carried out according to the measures described there.

3. A thermoplastic molding material containing 2-40% by weight of a graft copolymer as claimed in claim 1.

4. A thermoplastic molding material containing 60-98% by weight of a polyvinyl halide and 2-40% by weight of a graft copolymer as claimed in claim 1.

5. A molding produced from a thermoplastic molding material as claimed in claim 3 or 4.

## Revendications

1. Copolymères greffés, pouvant être obtenus par polymérisations successives en émulsion de mélanges de monomères en quatre étapes A, B, C et D, la polymérisation du mélange de monomères de chaque étape étant effectuée en présence du produit de polymérisation des étapes précédentes, la séquence des étapes étant A, B, C, D ou A, C, B, D,
dans l'étape A, on polymérise
de 5 à 35 % en poids d'un mélange de monomères constitué
de 60 à 79,9 % en poids d'un monomère vinylaromatique,
de 20 à 39,9 % en poids d'un nitrile à insaturation éthylénique,
de 0,1 à 10 % en poids d'un monomère ayant au moins deux insaturations éthyléniques, et
de 0 à 10 % en poids d'un autre monomère ;,
dans l'étape B, on polymérise
de 20 à 40 % en poids d'un mélange de monomères constitué
de 50 à 74,9 % en poids d'un monomère vinylaromatique,
de 25 à 49,9 % en poids d'un acrylate d'alkyle en C₁-C₁₈,
de 0,1 à 10 % en poids d'un monomère ayant au moins deux insaturations éthyléniques, et
de 0 à 10 % en poids d'un autre monomère ;
dans l'étape C, on polymérise
de 20 à 45 % en poids d'un mélange de monomères constitué
de 90 à 99,9 % en poids d'un acrylate d'alkyle en C₁-C₁₈ et
de 0,1 à 10 % en poids d'un monomère ayant au moins deux insaturations éthyléniques, et
de 0 à 10 % en poids d'un autre monomère ; et
dans l'étape D, on polymérise
de 5 à 35 % en poids d'un mélange de monomères constitué
de 60 à 79,9 % en poids d'un monomère vinylaromatique,
de 20 à 39,9 % en poids d'un nitrile à insaturation éthylénique et
de 0,1 à 10 % en poids d'un monomère ayant au moins deux insaturations éthyléniques, et
de 0 à 10 % en poids d'un autre monomère,
les pourcentages des mélanges de monomères utilisés dans les différentes étapes étant rapportés au copolymère greffé, leur somme étant de 100 % en poids.

2. Procédé pour préparer des copolymères greffés selon la revendication 1, caractérisé en ce qu'on met en oeuvre la préparation selon les conditions opératoires qui y sont décrites.

3. Mélanges à mouler thermoplastiques contenant
de 2 à 40 % en poids d'un copolymère greffé selon la revendication 1.

4. Mélanges à mouler thermoplastiques contenant
de 60 à 98 % en poids d'un poly(halogénure de vinyle) et
de 2 à 40 % en poids d'un copolymère greffé selon la revendication 1.

5. Objet moulé fabriqué à partir de mélanges à mouler thermoplastiques selon la revendication 3 ou 4.
